# NEUE EUROPÄISCHE PATENTSCHRIFT

(11) **EP 2 609 224 B2**
(45) Veröffentlichungstag und Bekanntmachung des Hinweises auf die Entscheidung über den Einspruch: **08.11.2023**
(45) Hinweis auf die Patenterteilung: 20.02.2019
(21) Anmeldenummer: 11748887.4
(22) Anmeldetag: 12.07.2011
(51) Int. Cl.: B21D 7/16, B21D 5/00, B21D 22/02, C21D 1/18, C21D 7/02, C21D 7/13, C21D 8/02, C21D 8/04, C21D 1/673

(54) **PROFILBAUTEIL UND VERFAHREN ZUR HERSTELLUNG EINES PROFILBAUTEILS**
PROFILED COMPONENT AND METHOD FOR PRODUCING A PROFILED COMPONENT
ELÉMENT PROFILÉ ET PROCÉDÉ DE FABRICATION D'UN ÉLÉMENT PROFILÉ

(30) Priorität: 24.08.2010 DE 102010035195
(43) Veröffentlichungstag der Anmeldung: 03.07.2013
(73) Patentinhaber: Volkswagen Aktiengesellschaft, 38436 Wolfsburg (DE)
(72) Erfinder: MARTIN, Verena, 38120 Braunschweig (DE); KLÄGER, Oliver, 38527 Meine (DE); KRENGEL, Sören, 38446 Wolfsburg (DE); BRÜGGEMAN, Carsten, 38106 Braunschweig (DE); KÜTTING, Jens, 38118 Braunschweig (DE)
(86) Internationale Anmeldenummer: PCT/EP2011/003466
(87) Internationale Veröffentlichungsnummer: WO 2012/025171

(56) Entgegenhaltungen:
- EP-A1- 1 180 470
- WO-A1-2008/145327
- DE-A1- 10 120 063
- DE-A1- 10 212 819
- DE-A1-102008 030 279
- DE-B3- 10 256 621
- DE-B3-102007 057 855
- DE-B4-102005 012 522
- US-A1- 2004 060 623
- HEIN PHILIPP ET AL: "Status and innovation trends in hot stamping of USIBOR 1500 P", STEEL RESEARCH INTERNATIONAL, VERLAG STAHLEISEN GMBH., DUSSELDORF, DE, Bd. 79, Nr. 2, 1. Februar 2008 (2008-02-01), Seiten 85-91, XP009101799, ISSN: 1611-3683
- MAIKRANZ-VALENTIN M ET AL: "Components with optimised properties due to advanced thermo-mechanical process strategies in hot sheet metal forming", STEEL RESEARCH INTERNATIONAL, VERLAG STAHLEISEN GMBH., DUSSELDORF, DE, Bd. 79, Nr. 2, 1. Februar 2008 (2008-02-01), Seiten 92-97, XP009120735, ISSN: 1611-3683
- MERKLEIN M ET AL: "Investigation of the thermo-mechanical properties of hot stamping steels", JOURNAL OF MATERIALS PROCESSING TECHNOLOGY, ELSEVIER, NL, Bd. 177, Nr. 1-3, 3. Juli 2006 (2006-07-03), Seiten 452-455, XP025080841, ISSN: 0924-0136, DOI: 10.1016/J.JMATPROTEC.2006.03.233 [gefunden am 2006-07-03]

## Beschreibung

Die Erfindung betrifft ein Verfahren zur Herstellung eines Profilbauteils mit zumindest einem Abschnitt erhöhter Härte und zumindest einem Bereich unveränderter Härte. Zur Herstellung wird ein Bauteilrohling zuerst mittels zumindest eines mindestens einstufigen Biegeprozesses umgeformt. Anschließend wird der zu härtende Abschnitt auf ein hohes Temperaturniveau erwärmt. Das Profilbauteil wird dann auf ein niedriges Temperaturniveau abgekühlt. Dabei werden das Profilbauteil und ein Thermalwerkzeug relativ zueinander bewegt.

Weiterhin betrifft die Erfindung ein Profilbauteil mit mindestens einem räumlich begrenzten Abschnitt erhöhter Härte und einem ungehärteten Bereich.

Solche Profilbauteile sind im Fahrzeugbau als Sicherheitsfunktionen wahrnehmende Strukturbauteile, beispielsweise als Schweller, Seitenaufprallträger, Stoßfänger oder Säulenverstärkungen, bekannt. An derartige Bauteile werden unterschiedlichste Anforderungen gestellt. Sie müssen bei einem Unfall einerseits die kinetische Energie des Aufpralls aufnehmen, sollen jedoch andererseits eine so hohe Festigkeit besitzen, dass sie bei einem Aufprall eine optimale Formstabilität für einen weitestmöglichen Schutz der Insassen des Fahrzeugs gewährleisten. Des Weiteren sollen solche Bauteile möglichst leicht sein, um den Kraftstoffverbrauch der Fahrzeuge zu senken. Ferner ist der für die Anordnung solcher Bauteile zur Verfügung stehende Konstruktionsbauraum in der Regel begrenzt, was die Erfüllung der an die Bauteile gestellten Anforderungen erschwert.

Dabei ist zusätzlich zunehmend der Einsatz von hoch- und höchstfesten Stählen erforderlich. Die Strukturteile werden in aller Regel in Form von Pressteilen aus Bauteilrohlingen durch Umformen hergestellt. Als Bauteilrohlinge sind Blechhalbzeuge in Form von Band-, Platinen- oder Rollenware, aber auch Rohre üblich. Das Umformen erfolgt in der Regel durch Rollprofilieren oder Walzprofilieren.

In diesem Zusammenhang ist es bekannt, kaltumformbare, hochfeste Stähle einzusetzen. Derartige Stähle eignen sich jedoch aufgrund ihrer eingeschränkten Umformeigenschaften nur für einfach profilierte Strukturteile.

Darüber hinaus zählt es zum Stand der Technik, härtbare Stähle zu verwenden. Diese Stähle werden zunächst in Form von Platinen oder Rohren im noch weichen Zustand zu Strukturteilen umgeformt. Erst in einem nachträglichen Härtevorgang erhalten die Strukturteile die erforderlichen Festigkeiten. Da die Stähle im weichen Zustand gute Umformeigenschaften aufweisen, können aus ihnen auch komplex profilierte Strukturteile hergestellt werden.

Durch Härten von Stahl wird eine Erhöhung der mechanischen Widerstandsfähigkeit durch gezielte Änderung und Umwandlung des Gefüges erzielt. Charakteristisch für das Härten ist der Einsatz eines vergütbaren Stahls. Weiterhin sind eine vollständige Austenitisierung durch Erwärmung auf 900 °C bis 950 °C sowie eine definierte Abkühlung für die Einstellung der Härte des Materials kennzeichnend.

Die zum Härten erforderliche Erwärmung auf Austenitisierungstemperatur wird bislang häufig in gasbeheizten oder in mit einer elektrischen Beheizung versehenen Durchlauföfen durchgeführt. Um eine kontinuierliche Produktion zu gewährleisten, sind derartige Durchlauföfen in die Fertigungslinie der Strukturteile integriert. Nachteilig hierbei ist der große Raumbedarf dieser Durchlauföfen. Außerdem ist auf den erheblichen Energieverbrauch und die nicht zu vermeidenden Wärmeverluste hinzuweisen. Auch kann bei Einsatz von Durchlauföfen ein partielles Härten der Strukturteile nicht durchgeführt werden.

Schließlich ist es, unter anderem aus der Druckschrift DE 10 2008 030 279 A1, noch bekannt, härtbare Stähle in kombinierten Form- und Härtungswerkzeugen zu Strukturteilen umzuformen. In diesem Fall werden Platinen oder Rohre vor der Formgebung auf Austenitisierungstemperatur gebracht und dann in einem gekühlten Formwerkzeug gleichzeitig umgeformt und gehärtet. Auch diese Vorgehensweise ist zwangsläufig mit einem hohen werkzeug- und energietechnischen Aufwand verbunden. Sie erhöht außerdem in erheblichem Maße die Taktzeiten bei der Umformung.

Aus der Druckschrift EP 1 052 295 A2 ist es bekannt, fertig konfektionierte Strukturteile in einem späteren Arbeitsschritt zu härten. Dabei wird ein Induktor mit einer nachlaufenden Kühleinheit relativ zu dem Strukturteil bewegt. Wird der Induktor nur über vorbestimmte Bereiche des Strukturbauteils geführt, führt das dazu, dass nur diese Bereiche mit der gewünschten Festigkeit versehen werden.

Weiterhin sind bekannt aus der DE 10 2007 024 797 A1 ein Verfahren zur Herstellung eines Profilbauteils, aus der DE 10 2005 012 522 B4 eine Vorrichtung zum abschnittsweisen Durchhärten von fertig geformten Bauteilen unter Schutzgas, aus der DE 101 20 063 A1 ein Verfahren zur Herstellung von Profilbauteilen, die zunächst umgeformt und anschließend partiell induktiv gehärtet werden, und aus der DE 10 2007 059 974 B3 ein Verfahren zur Herstellung eines Bauteils, das zumindest in Teilbereichen unter Schutzgas auf eine Härtetemperatur erwärmt wird, wobei das Bauteil und ein ein elektromagnetisches Feld erzeugender Induktor relativ zueinander bewegt werden.

M. Maikranz-Valentin und weitere Autoren beschreiben in "Components with Optimised Properties due to Advanced Thermo-mechanical Process Strategies in Hot Sheet Metal Forming" (in STEEL RESEARCH INTERNATIONAL, Vol. 79, No. 2, Seiten 92 - 97) unter anderem das Presshärten und einen Rollformvorgang zum Herstellen unterschiedlich gehärteter Profilbauteile durch unterschiedliche Wärmebeeinflussung. Das Erwärmen und/oder Vergüten beim Rollformvorgang erfolgt zwischen einzelnen Rollformstufen.

Die DE 102 12 819 A1 beschreibt ein Verfahren zur Herstellung eines gehärteten metallischen Bauteils, wobei in dem Bauteil ungehärtete Bereiche verbleiben. Hierzu wird das betreffende Bauteil mittels Widerstandserwärmen erwärmt, wobei während des Widerstandserwärmens gezielt Bereiche gekühlt oder elektrisch überbrückt werden, um in diesen Bereichen unterhalb der Austenitisierungstemperatur zu bleiben. Alternativ wird ein Verfahren vorgeschlagen, bei dem das Bauteil mittels elektrischem Widerstandserwärmen erwärmt wird und während oder vor dem Widerstanderwärmen gezielt nur bestimmte Bereiche auf eine Temperatur oberhalb der Austenitisierungstemperatur eingestellt werden.

Ausgehend von dem aus der DE 101 20 063 A1 vorbekannten Verfahren liegt der Erfindung die Aufgabe zugrunde, neue Möglichkeiten für die Herstellung eines partiell gehärteten Profilbauteils ohne Härteverzug aufzuzeigen.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren zur Herstellung eines als Profilbauteil ausgebildeten Schwellers vorgesehen, bei dem zumindest der ungehärtete Bereich oder das ganze Profilbauteil nach dem Umformen und vor oder/und während der Erwärmung des zu härtenden Abschnitts auf ein mittleres Temperaturniveau erwärmt wird. Aus der großen Temperaturdifferenz zwischen dem räumlich begrenzten Abschnitt, der zum Härten auf ein hohes Temperaturniveau erwärmt wird, und dem nicht zu härtenden Bereich entstehen in dem Profilbauteil Spannungen. Ohne Nachbehandlung des Profilbauteils führen die Spannungen beim Abkühlen des Profilbauteils, insbesondere beim Abkühlen auf ein tiefes Temperaturniveau wie Raumtemperatur, zu einem Verzug des Profilbauteils. Durch die Erwärmung der nicht zu härtenden Bereiche auf ein mittleres Temperaturniveau ist es möglich, die Entstehung der temperaturabhängigen Spannungen soweit zu reduzieren, dass sich das Profilbauteil beim Abkühlen nicht mehr verzieht. Die Erwärmung zur Verhinderung eines Bauteilverzugs erfolgt bis zu einer Temperatur unterhalb der Austenitisierungstemperatur von 723 °C, wobei dieses mittlere Temperaturniveau bei 400 °C bis 450 °C liegt. Dabei kann die Erwärmung auf das mittlere Temperaturniveau durch eine dem Härten vorgelagerte Erwärmung oder durch eine elektromagnetische Erwärmung des räumlich abgegrenzten Bereichs oder des gesamten Profilbauteils erfolgen.

Das Härten erfolgt durch eine Wärmebehandlung mit anschließendem schnellen Abkühlen. Dabei setzt das zum Härten notwendige hohe Temperaturniveau eine Temperatur deutlich über der Austenitisierungstemperatur von 723 °C voraus. Hier wird eine Temperatur aus dem Bereich von 900 °C bis 950 °C angewandt. Beim Abkühlen wird die Temperatur des Profilbauteils auf ein Temperaturniveau gesenkt, welches unterhalb von 200 °C, vorzugsweise bei 180 °C bis 150 °C, liegt. Zum härtenden Abkühlen wird zumindest der auf das hohe Temperaturniveau erwärmte Abschnitt oder das ganze Profilbauteil mit einer Kühlgeschwindigkeit von mehr als 27 °K/s abgekühlt. Hierzu wird eine Wasserdusche oder eine vergleichbare Einrichtung eingesetzt.

Zum Erwärmen des Profilbauteils oder zumindest des partiellen Abschnitts auf das hohe Temperaturniveau wird die Wärme elektromagnetisch im Profilbauteil mittels eines Lasers oder eines Induktors erzeugt. Hierdurch ist es möglich, gezielt und räumlich begrenzt die thermodynamischen und physikalischen Eigenschaften des Profilbauteils hinsichtlich Härte, Festigkeit und Dehnung und somit auch das Deformationsverhalten und das Werkstoffverhalten beim Fügen zu beeinflussen.

Günstig ist es, dass das Profilbauteil beim Erwärmen von einem Schutzgas umgeben ist. Hierdurch ist es möglich, der Bildung einer Oxidschicht entgegenzuwirken. Alternativ ist auch die Verwendung eines Materials mit einer entsprechenden Beschichtung möglich.

Der Begriff "Thermalwerkzeug" umfasst die Einrichtung zur Wärmeerzeugung, die Einrichtung zum Kühlen und/oder eine Einrichtung zur Erzeugung einer Schutzgashülle. Als Einrichtung zur Wärmeerzeugung ist ein Laser beziehungsweise ein Induktor vorgesehen und für die Einrichtung zum Kühlen wird eine Wasserdusche eingesetzt.

Durch eine gezielte Einstellung der Leistung des Thermalwerkzeugs ist es möglich, definierte Härteübergangsbereiche zu schaffen. Dabei wird die Leistung des Thermalwerkzeugs in Abhängigkeit vorgegebener Parameter, der relativen Position und/oder der relativen Geschwindigkeit des Thermalwerkzeugs zu dem Profilbauteil derart eingestellt, dass über eine beliebige Distanz ein kontinuierlicher Härteübergang von HV 160 bis HV 510 erzielt wird.

Durch die erfindungsgemäß ermöglichten, variabel über die Länge und den Querschnitt eines Profilbauteils genau definierbaren Härtezonen wird es möglich, das Deformationsverhalten gezielt zu beeinflussen. So ist es beispielsweise möglich, bei einem Schweller im Anschlussbereich der B-Säule einen Bereich des Querschnitts vom Härten auszunehmen. Ein derart eingestellter Schweller kann bei einem Seitenaufprall durch Verformung viel kinetische Energie aufnehmen. Durch die Verformung des Schwellers kann die B-Säule im unteren Bereich entlastet werden. Auch ist es möglich, dass ein Bereich, der sich in axialer Richtung über die gesamte Bauteillänge erstreckt, in einem ungehärteten Zustand verbleibt. Dadurch dass der Härteverlauf kontinuierlich, also sprungfrei eingestellt ist, kann beim Setzen von Schweißpunkten oder Schweißnähten und der damit verbundenen Erwärmung und Abkühlung keine Härteverlauf bedingte Kerbe entstehen.

Die Aufgabe wird weiterhin gelöst mit einem als Schweller ausgebildeten und mit dem erfindungsgemäßen Verfahren hergestellten Profilbauteil gemäß den Merkmalen des Patentanspruchs 6. Die Unteransprüche betreffen besonders zweckmäßige Weiterbildungen der Erfindung.

Erfindungsgemäß ist also ein Profilbauteil vorgesehen, das über seinen Querschnitt und/oder in axialer Richtung Abschnitte unterschiedlicher Härte aufweist. Das Profilbauteil kann in vorteilhaften Ausführungsformen mindestens einen teilgehärteten Abschnitt und/oder mindestens einen durchgehärteten Abschnitt aufweisen. Es besteht zudem die Möglichkeit, dass das Profilbauteil über seine Profillänge zumindest abschnittsweise unterschiedliche Profilquerschnitte aufweist.

Des Weiteren kann das Profilbauteil in einer besonders vorteilhaften Ausführungsform über seine Profillänge zumindest abschnittsweise unterschiedliche, insbesondere sich ändernde Festigkeitseigenschaften aufweisen. Dabei ist es für die Weiterverarbeitung, wie das Fügen mit anderen Bauelementen, besonders günstig, dass der Härteverlauf im Übergangsbereich zwischen zwei Abschnitten und/oder Bereichen unterschiedlicher Härte kontinuierlich verläuft.

Als vorteilhaft hat sich erwiesen, dass insbesondere die Bereiche, in denen das Profilbauteil an andere Bauelemente angeschlossen wird und/oder Fügeelemente gesetzt werden, ungehärtet ist. Des Weiteren sind diese ungehärteten Bereiche geeignet, kinetische Energie durch Verformung aufzunehmen und zu kompensieren.

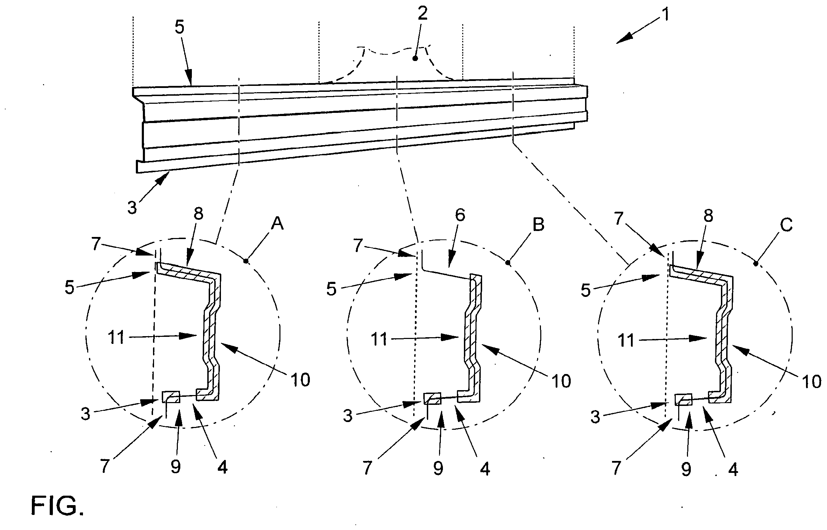

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt eine perspektivische Ansicht eines Profilbauteils 1 und an den Stellen A, B, C geschnittene Darstellungen des Profilbauteils 1.

Das gezeigte Profilbauteil 1 ist ein Schweller eines Kraftfahrzeugs. Das Profilbauteil 1 hat Zonen unterschiedlicher Wärmebeaufschlagung und daraus resultierender Gefüge- und Werkstoffeigenschaften. An dem Profilbauteil 1 ist ein Bauelement 2, hier beispielhaft die B-Säule eines Kraftfahrzeugs, zur Befestigung vorgesehen.

Die Querschnitte A, B und C liegen in den unterschiedlichen Zonen. Der Querschnitt A liegt zwischen der A-Säule und der B-Säule des Kraftfahrzeugs. Der Querschnitt B ist der Anschlusszone der B-Säule des Kraftfahrzeugs zugeordnet. Der Querschnitt C liegt zwischen der B-Säule und der C-Säule des Kraftfahrzeugs.

Das Profilbauteil 1 weist im unteren Profilschenkel 3 einen über die Längserstreckung des Profilbauteils 1 durchgängig ungehärteten Bereich 4 auf. In diesem Bereich 4 können in das Profilbauteil 1 mit mechanischen Verfahren, auch unter der Randbedingung einseitiger Zugänglichkeit, entsprechende mechanische Fügeelemente gesetzt werden. Dabei bedarf es keiner vorhergehenden Operation zur Schaffung von Durchbrechungen.

In der Anschlusszone der B-Säule an den Schweller weist das Profilbauteil 1 im oberen Profilschenkel 5 einen ungehärteten Bereich 6 auf. Dieser Bereich 6 und weitere ungehärtete Bereiche 7 im oberen Profilschenkel 5 und im unteren Profilschenkel 3 sind dergestalt dimensioniert, dass sich in Kombination der mechanischen Eigenschaften von B-Säule und Schweller, also von Profilbauteil 1 und Bauelement 2, im Belastungsfall eines Seitenaufpralls geringere Dehnungen in der Anschlusszone ergeben.

Das Profilbauteil 1 hat weiterhin die Abschnitte 8 im oberen Profilschenkel 5, den Abschnitt 9 im unteren Profilschenkel 3 und den Abschnitt 10 im Profilsteg 11 des Profilbauteils 1 mit unterschiedlicher, jedoch gegenüber dem Ausgangszustand erhöhter Härte.

## Patentansprüche

1. Verfahren zur Herstellung eines Profilbauteils (1) mit zumindest einem Abschnitt (8, 9, 10) erhöhter Härte und zumindest einem Bereich (4, 6, 7) unveränderter Härte, wobei ein Bauteilrohling zuerst mittels zumindest eines mindestens einstufigen Biegeprozesses umgeformt wird und anschließend der zu härtende Abschnitt (8, 9, 10) auf ein hohes Temperaturniveau über 723 °C erwärmt wird und dann das Profilbauteil (1) auf ein niedriges Temperaturniveau unter 200 °C abgekühlt wird, wobei das Profilbauteil (1) und ein Thermalwerkzeug relativ zueinander bewegt werden, **dadurch gekennzeichnet, dass** nach dem Umformen des Bauteilrohlings zu dem Profilbauteil (1) und vor und/oder während der Erwärmung des zu härtenden Abschnitts (8, 9, 10) auf ein hohes Temperaturniveau bei deutlich über 723 °C auch der zumindest eine nicht zu härtende Bereich (4, 6, 7) auf ein mittleres Temperaturniveau unter 723 °C erwärmt wird, um beim Abkühlen des Profilbauteils (1) auf das niedrige Temperaturniveau unter 200 °C die Entstehung temperaturabhängiger Spannungen im Profilbauteil (1) soweit zu reduzieren, dass sich das Profilbauteil (1) beim Abkühlen nicht mehr verzieht, wobei das Profilbauteil (1) als Schweller für ein Kraftfahrzeug ausgebildet ist.

2. Verfahren zur Herstellung eines als Profilbauteil (1) ausgebildeten Schwellers nach Anspruch 1, **dadurch gekennzeichnet, dass** das hohe Temperaturniveau bei 900 °C bis 950 °C liegt, das mittlere Temperaturniveau bei 400 °C bis 450 °C liegt und/oder das niedrige Temperaturniveau bei 180 °C bis 150 °C liegt.

3. Verfahren zur Herstellung eines als Profilbauteil (1) ausgebildeten Schwellers nach zumindest einem der Ansprüche 1 oder 2, **dadurch gekennzeichnet, dass** zumindest der auf das hohe Temperaturniveau erwärmte Abschnitt oder das ganze Profilbauteil (1) mit einer Kühlgeschwindigkeit von mehr als 27°K/s abgekühlt wird.

4. Verfahren zur Herstellung eines als Profilbauteil (1) ausgebildeten Schwellers nach zumindest einem der vorangehenden Ansprüche, **dadurch gekennzeichnet, dass** beim Erwärmen auf zumindest das hohe Temperaturniveau die Wärme mittels Laser und/oder Induktion im Profilbauteil (1) erzeugt wird.

5. Verfahren zur Herstellung eines als Profilbauteil (1) ausgebildeten Schwellers nach zumindest einem der vorangehenden Ansprüche, **dadurch gekennzeichnet, dass** die Leistung des Thermalwerkzeugs in Abhängigkeit vorgegebener Parameter, der relativen Position und/oder der relativen Geschwindigkeit des Thermalwerkzeugs zu dem Profilbauteil (1) eingestellt wird.

6. Als Profilbauteil (1) ausgebildeter Schweller für ein Kraftfahrzeug, hergestellt nach einem Verfahren gemäß einem der vorausgehenden Ansprüche, mit mindestens einem räumlich begrenzten Abschnitt (8, 9, 10) erhöhter Härte und zumindest einem ungehärteten Bereich (4, 6, 7), womit das Profilbauteil (1) über seinen Querschnitt und/oder in axialer Richtung Abschnitte (8, 9, 10) und Bereiche (4, 6, 7) unterschiedlicher Härte aufweist, wobei die Bereiche (4, 6), in denen das Profilbauteil (1) an andere Bauelemente angeschlossen wird und/oder Fügeelemente gesetzt werden, ungehärtet sind.

7. Schweller (1) nach Anspruch 6, **dadurch gekennzeichnet, dass** der Härteverlauf im Übergangsbereich zwischen zumindest zwei Abschnitten (8, 9, 10) und/oder Bereichen (4, 6, 7) unterschiedlicher Härte kontinuierlich verläuft.

8. Schweller nach Anspruch 6 oder 7, mit einem Profilsteg (11), einem oberen Profilschenkel (5) und einem unteren Profilschenkel (3), wobei der Anschlussbereich (6) der B-Säule (2) im oberen Profilschenkel (5) ungehärtet ist und dadurch bei einem Seitenaufprall durch Verformung viel kinetische Energie aufnehmen kann.

## Claims

1. Method for producing a profiled component (1) having at least one portion (8, 9, 10) of increased hardness and at least one region (4, 6, 7) of unchanged hardness, wherein a component blank is first formed by means of at least one at least single-staged bending process, and the portion (8, 9, 10) to be hardened is subsequently heated to a high temperature level above 723°C, and the profiled component (1) is then cooled to a low temperature level below 200°C, wherein the profiled component (1) and a thermal tool are moved relative to one another, **characterized in that** after the forming of the component blank to the profiled component (1), and before and/or during the heating of the portion (8, 9, 10) to be hardened to a high temperature level at significantly above 723°C, the at least one region (4, 6, 7) not to be hardened is also heated to a medium temperature level below 723°C so as to when cooling the profiled component (1) to the low temperature level below 200°C reduce the creation of temperature-dependent stresses in the profiled component (1) to the extent that the profiled component (1) when cooling is no longer distorted, wherein the profiled component (1) is configured as a sill for a motor vehicle.

2. Method for producing a sill configured as a profiled component (1) according to Claim 1, **characterized in that** the high temperature level is 900°C to 950°C, the medium temperature level is 400°C to 450°C, and/or the low temperature level is 180°C to 150°C.

3. Method for producing a sill configured as a profiled component (1) according to at least one of Claims 1 or 2, **characterized in that** at least the portion heated to the high temperature level, or the entire profiled component (1), is cooled at a cooling rate of more than 27°K/s.

4. Method for producing a sill configured as a profiled component (1) according to at least one of the preceding claims, **characterized in that** the heat in the profiled component (1), when heating to at least the high temperature level, is generated by laser and/or induction.

5. Method for producing a sill configured as a profiled component (1) according to at least one of the preceding claims, **characterized in that** the output of the thermal tool is set depending on predefined parameters, of the position relative, and/or on the speed of the thermal tool relative to the profiled component (1).

6. Sill, configured as a profiled component (1), for a motor vehicle, produced by a method according to one of the preceding claims, having at least one spatially delimited portion (8, 9, 10) of increased hardness, and at least one non-hardened region (4, 6, 7), the profiled component (1) across the cross section thereof and/or in the axial direction thus having portions (8, 9, 10) and regions (4, 6, 7) of dissimilar hardness, wherein the regions (4, 6) in which the profiled component (1) is connected to other construction elements, and/or joining elements are placed, are non-hardened.

7. Sill (1) according to Claim 6, **characterized in that** the hardness profile in the transition region between at least two portions (8, 9, 10) and/or regions (4, 6, 7) of dissimilar hardness runs in a continuous manner.

8. Sill according to Claim 6 or 7, having a profiled web (11), an upper profiled leg (5), and a lower profiled leg (3), wherein the connection region (6) of the B-pillar (2) in the upper profiled leg (5) is non-hardened, and on account thereof in the event of a side impact can absorb much kinetic energy by deformation.

## Revendications

1. Procédé de fabrication d'un composant profilé (1) avec au moins un tronçon (8, 9, 10) de dureté accrue et avec au moins une zone (4, 6, 7) de dureté inchangée, une ébauche de composant étant d'abord déformée au moyen d'au moins un processus de cintrage à au moins un étage, puis le tronçon (8, 9, 10) à durcir étant chauffé à un niveau de température élevé supérieur à 723 °C, et le composant profilé (1) étant alors refroidi à un niveau de température faible inférieur à 200 °C, le composant profilé (1) et un outil thermique étant déplacés relativement l'un à l'autre, **caractérisé en ce que**, après la déformation de l'ébauche de composant en composant profilé (1) et avant et/ou pendant le chauffage du tronçon (8, 9, 10) à durcir à un niveau de température élevé bien supérieur à 723 °C, l'au moins une zone (4, 6, 7) ne devant pas être durcie est également chauffée à un niveau de température moyen inférieur à 723 °C pour, lors du refroidissement du composant profilé (1) au niveau de température faible inférieure à 200 °C, réduire l'apparition de contraintes liées à la température dans le composant profilé (1) au point que le composant profilé (1) ne se gauchit plus lors du refroidissement, le composant profilé (1) étant constitué en tant que seuil pour un véhicule automobile.

2. Procédé de fabrication d'un seuil constitué en tant que composant profilé (1) selon la revendication 1, **caractérisé en ce que** le niveau de température élevé est compris entre 900 °C et 950 °C, le niveau de température moyen est compris entre 400 °C et 450 °C et/ou le niveau de température faible est compris entre 180 °C et 150 °C.

3. Procédé de fabrication d'un seuil constitué en tant que composant profilé (1) selon au moins l'une des revendications 1 et 2, **caractérisé en ce qu'**au moins le tronçon chauffé au niveau de température élevée ou la totalité du composant profilé (1) est refroidi(e) à une vitesse de refroidissement supérieure à 27 °K/s.

4. Procédé de fabrication d'un seuil constitué en tant que composant profilé (1) selon au moins l'une des revendications précédentes, **caractérisé en ce que**, lors du chauffage au moins jusqu'au niveau de température élevée, la chaleur est produite dans le composant profilé (1) par laser et/ou par induction.

5. Procédé de fabrication d'un seuil constitué en tant que composant profilé (1) selon au moins l'une des revendications précédentes, **caractérisé en ce que** la puissance de l'outil thermique est réglée en fonction de paramètres spécifiés au préalable, de la position relative et/ou de la vitesse relative de l'outil thermique par rapport au composant profilé (1).

6. Seuil pour véhicule automobile constitué en tant que composant profilé (1), fabriqué selon un procédé selon l'une des revendications précédentes, avec au moins un tronçon (8, 9, 10) limité dans l'espace, de dureté accrue, et avec au moins une zone (4, 6, 7) non durcie, avec quoi le composant profilé (1) comporte, sur sa section transversale et/ou dans la direction axiale, des tronçons (8, 9, 10) et des zones (4, 6, 7) de duretés différentes, les zones (4, 6) dans lesquelles le composant profilé (1) est raccordé à d'autres éléments de construction et/ou des éléments d'assemblage sont placés n'étant pas durcies.

7. Seuil (1) selon la revendication 6, **caractérisé en ce que** la courbe de dureté dans la zone de transition entre au moins deux tronçons (8, 9, 10) et/ou zones (4, 6, 7) de duretés différentes a une allure continue.

8. Seuil selon la revendication 6 ou 7, avec une âme de profilé (11), une branche de profilé supérieure (5) et une branche de profilé inférieure (3), la zone de raccordement (6) du montant B (2) n'étant pas durcie dans la branche de profilé supérieure (5) et pouvant de ce fait absorber une grande quantité d'énergie cinétique par déformation en cas d'impact latéral.
